# EUROPÄISCHE PATENTANMELDUNG

(11) **EP 1 345 478 A2**
(43) Veröffentlichungstag der Anmeldung: **17.09.2003**
(21) Anmeldenummer: 03004437.4
(22) Anmeldetag: 27.02.2003
(51) Int. Cl.: H05B 41/04

(54) **Schaltungsanordnung zur Zündung von Hochdruck-Entladungslampen**

(30) Priorität: 12.03.2002 DE 10210717
(71) Anmelder: Patent-Treuhand-Gesellschaft für elektrische Glühlampen mbH, 81543 München (DE)
(72) Erfinder: Huber, Andreas, 82216 Maisach (DE); Witzani, Friedrich, 81477 München (DE)

(57) **Zusammenfassung**

Schaltungsanordnung zur Zündung von Hochdruck-Entladungslampen mittels Resonanzzündung durch eine Serienresonanzkreis. Erfindungsgemäß wird die Spannung für eine Zündhilfselektrode durch einen Zündübertrager bereitgestellt, in den die Spannung über einer Induktivität (L1) des Serienresonanzkreises eingespeist wird. Bevorzugt bildet die Induktivität (L1) des Serienresonanzkreises die Primärwicklung des Zündübertragers.

## Beschreibung

### Technisches Gebiet

Die Erfindung geht aus von einer Schaltungsanordnung gemäß dem Oberbegriff des Anspruchs 1. Es handelt sich dabei insbesondere um eine Schaltungsanordnung, zur Zündung von Hochdruck-Entladungslampen (im folgenden auch kurz Lampe genannt). Zudem betrifft die Erfindung Beleuchtungssysteme mit einem Betriebsgerät und einer Hochdruck-Entladungslampe, wobei zur Unterstützung der Zündung das Beleuchtungssystem eine Zündhilfselektrode enthält, für die o. g. Schaltungsanordnung im Betriebsgerät einen Anschluss bereit stellt.

### Stand der Technik

In der Schrift WO 00/77826 (Van den Nieuwenhuizen) wird eine Hochdruck-Entladungslampe mit zwei Elektroden vorgeschlagen, bei der ein Glaskörper, der eine Zuleitung zu einer Elektrode umschließt, einen Hohlraum aufweist. Um den Glaskörper ist an der Stelle, an der sich der Hohlraum befindet, eine Zündhilfselektrode in Form einer Drahtschlaufe gelegt, die elektrisch leitend mit der Elektrode verbunden ist, auf deren Zuleitung sich kein Hohlraum befindet. Der Zweck dieser Anordnung ist die Reduzierung der Zündspannung der Lampe. Durch die Zündhilfselektrode wird im Hohlraum eine dielektrisch behinderte Entladung angeregt. Die dadurch entstehende UV-Strahlung produziert im Entladungsraum der Lampe Ionen, die eine Zündung der Lampe unterstützen. Die Zündspannung der Lampe, d.h. die für die Zündung der Lampe notwendige Spannung wird durch die beschriebene Anordnung zwar reduziert, jedoch ist nun eine hohe Spannung für die Zündhilfselektrode erforderlich, die den genannten Vorteil zumindest teilweise zunichte macht.

Dieses Dilemma versucht die Schrift WO 01/59811 zu lösen. Darin wird vorgeschlagen, die Zündhilfselektrode nicht direkt mit einer Elektrode der Lampe zu verbinden. Vielmehr wird zwischen die Anschlüsse der Lampe die Primärwicklung eines Transformators geschaltet und die Zündhilfselektrode an die, gegenüber der Primärwicklung hochtransformierte Spannung einer Sekundärwicklung angeschlossen. Nachteil dieser Lösung ist der Aufwand, der in Form des Transformators getrieben werden muss.

### Darstellung der Erfindung

Es ist nun Aufgabe der vorliegenden Erfindung, eine Schaltungsanordnung gemäß dem Oberbegriff des Anspruchs 1 bereitzustellen, die eine Zündung einer Hochdruck-Entladungslampe mit geringem Aufwand bewerkstelligt.

Diese Aufgabe wird durch eine Schaltungsanordnung mit den Merkmalen des Oberbegriffs des Anspruchs 1 durch die Merkmale des kennzeichnenden Teils des Anspruchs 1 gelöst. Weiterhin wir die Aufgabe durch ein Beleuchtungssystem mit den Merkmalen des Anspruchs 5 gelöst. Besonders vorteilhafte Ausgestaltungen finden sich in den abhängigen Ansprüchen.

Bei den in Rede stehenden Lampen handelt es sich um Wechselspannungslampen, die aus einer Wechselspannungsquelle gespeist werden, die eine Wechselquellspannung liefert. Insbesondere bei Anwendungen in der Projektionstechnik ist die Wechselquellspannung bevorzugt rechteckförmig und wird mittels einer Vollbrücke bestehend aus vier elektronischen Schaltern bereit gestellt.

Bei herkömmlichen Lampen ohne den o. g. Hohlraum wird meist eine bekannte Pulszündung mittels eines sog. Zündgeräts, das zwischen die Wechselspannungsquelle und die Lampe geschaltet ist, vorgenommen. Bei Lampen mit reduzierter Zündspannung durch o. g. Zündhilfselektrode und Hohlraum ist keine Pulszündung und damit kein Zündgerät nötig. Vielmehr wird die Zündspannung durch die Resonanz eines Serienschwingkreises bestehend aus der Serienschaltung einer Resonanzinduktivität und einer Resonanzkapazität erzeugt. Der Serienschwingkreis wird von der Wechselquellspannung gespeist. An der Verbindungsstelle von Resonanzinduktivität und Resonanzkapazität bildet sich ein Schwingkreismittelpunkt aus, der mit einem ersten Lampenanschluss gekoppelt ist.

Ohne Beschränkung der Allgemeinheit, wird im folgenden davon ausgegangen, dass sich ein evtl. vorhandener o. g. Hohlraum an der Zuleitung zu der Lampenelektrode befindet, die mit dem ersten Lampenanschluss gekoppelt ist. Für den anderen Fall gelten die folgenden Ausführungen mit entsprechend angepassten Anschlussbezeichnungen.

Der zweite Lampenanschluss ist mit dem, dem Schwingkreismittelpunkt abgewandten Anschluss der Resonanzkapazität gekoppelt. Somit ist die Lampe parallel zur Resonanzkapazität geschaltet. Wird der Serienschwingkreis mit seiner Resonanzfrequenz angeregt, so bildet sich über der Lampe eine Spannung aus, die ausreichend für eine Zündung der Lampe ist, falls eine Reduzierung der Zündspannung durch o. g. Zündhilfselektrode und Hohlraum realisiert ist. Ist die Wechselquellspannung rechteckförmig, so ist es nicht nötig, dass die Grundschwingung der Wechselquellspannung der Resonanzfrequenz des Serienschwingkreises entspricht; viel mehr können Oberschwingungen der Wechselquellspannung ausgenutzt werden, um den Serienschwingkreises anzuregen. Bevorzugt werden die dritte, fünfte oder siebte Oberschwingung ausgenutzt.

Wird ein symmetrischer Aufbau des Serienschwingkreises gewünscht, so kann die Resonanzinduktivität in zwei Teil-Resonanzinduktivitäten aufgeteilt werden. Je ein Pol der Wechselquellspannung ist dann über eine Teil-Resonanzinduktivität mit der Resonanzkapazität verbunden, zu der parallel die Lampe geschaltet ist.

Nun muss jedoch eine noch höhere Spannung als die im Resonanzfall an der Resonanzkapazität anliegende Zündspannung an einem Anschluss für die Zündhilfselektrode bereitgestellt werden. Erfindungsgemäß wird das dadurch erreicht, dass die Spannung, die über der Resonanzinduktivität anliegt in die Primärwicklung eines Zündübertragers eingespeist wird. Der Zündübertrager stellt an einer Sekundärwicklung eine mit einem Übersetzungsverhältnis multiplizierte Spannung an der Resonanzinduktivität bereit. Ein erster Anschluss der Sekundärwicklung ist mit dem Anschluss für die Zündhilfselektrode gekoppelt. Ein zweiter Anschluss der Sekundärwicklung kann an unterschiedlichen Potenzialen der Schaltungsanordnung angeschlossen sein. Er kann mit einem der beiden Anschlüsse der Resonanzinduktivität oder mit dem zweiten Lampenanschluss gekoppelt werden Das Übersetzungsverhältnis ist erfindungsgemäß so gewählt, dass zwischen dem ersten Lampenanschluss und dem Zündhilfselektroden-Anschluss im Resonanzbetrieb des Serienschwingkreises eine Spannung ansteht, die für die Erzeugung von UV-Strahlung im Hohlraum ausreichend ist.

Wichtig für die Wahl der Kopplung des zweiten Anschlusses der Sekundärinduktivität ist auch die Spannung, die sich zwischen der Zündhilfselektrode und dem zweiten Lampenanschluss einstellt. Ein hoher Wert für diese Spannung erzeugt in der Lampe eine hohe Feldstärke, wodurch die Zündung der Lampe unterstützt wird. Erfindungsgemäß wird deshalb der zweite Anschluss der Sekundärwicklung bevorzugt mit dem Schwingkreismittelpunkt gekoppelt.

Erfindungsgemäß wird im Zusammenhang mit der oben erwähnten Feldstärke in der Lampe der Wickelsinn des Zündübertragers so gewählt, dass die Spannung an der Sekundärwicklung so gepolt ist, dass sie zur Spannung zwischen den Lampenanschlüssen addiert und nicht subtrahiert wird. D. h., dass mit Bezug auf den zweiten Lampenanschluss ist die Spannung am Zündhilfselektroden-Anschluss größer als die Spannung am ersten Lampenanschluss.

Wie oben beschrieben, wird erfindungsgemäß die Spannung an der Resonanzinduktivität in die Primärwicklung des Zündübertragers eingespeist. Im allgemeinen ist demnach für die Resonanzinduktivität und den Zündübertrager je ein Bauelement nötig. Zur Einsparung eine Bauelements wird erfindungsgemäß die Resonanzinduktivität als Primärwicklung des Zündübertragers benutzt. Damit wird zur Bereitstellung des Zündübertragers vorteilhaft kein separates Bauteil benötigt. Die ohnehin vorhandene Resonanzinduktivität wird lediglich um eine Sekundärwicklung erweitert.

In einem Beleuchtungssystem, bei dem an den Lampenanschlüssen eines Betriebsgeräts, das die oben beschriebene Schaltungsanordnung enthält, eine Lampe angeschlossen ist, kann eine mit dem Zündhilfselektroden-Anschluss verbundene Zündhilfselektrode an einer beliebigen Stelle in der Nähe des Entladungsgefäßes der Lampe angebracht sein. Durch die o.g. Feldstärke wird dadurch die Zündung der Lampe unterstützt. Weist der Glaskörper der Lampe , der eine Zuleitung zu einer Elektrode umschließt, einen Hohlraum auf, so wird die Zündhilfselektrode bevorzugt um den Hohlraum gewickelt, um UV-Strahlung zu erzeugen.

### Bevorzugte Ausführung der Erfindung

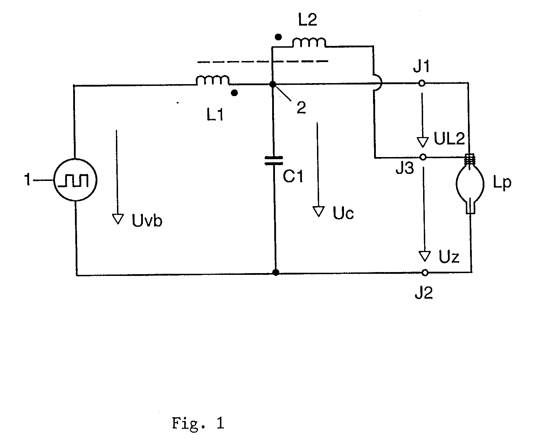

In der beigefügten Figur ist ein bevorzugtes Ausführungsbeispiel der Erfindung dargestellt.

Von einer Wechselspannungsquelle 1 wird eine Wechselquellspannung Uvb in einen Serienschwingkreis bestehend aus der Serienschaltung einer Resonanzinduktivität L1 und einer Resonanzkapazität C1 eingespeist. Am Verbindungspunkt der Resonanzinduktivität L1 und der Resonanzkapazität C1 bildet sich der Schwingkreismittelpunkt 2 aus. Der Schwingkreismittelpunkt 2 ist mit einem ersten Lampenanschluss J1 verbunden an dem eine erste Elektrode einer Hochdruck-Entladungslampe Lp angeschlossen ist. Der dem Schwingkreismittelpunkt 2 abgewandte Anschluss der Resonanzkapazität C1 ist mit einem zweiten Lampenanschluss J2 verbunden, an dem eine zweite Elektrode der Hochdruck-Entladungslampe Lp angeschlossen ist.

Die Resonanzinduktivität L1 bildet die Primärwicklung eines Zündübertragers. Eine Induktivität L2 bildet die Sekundärwicklung des Zündübertragers. Ein erster Anschluss der Induktivität L2 ist mit dem Anschluss J3 für die Zündhilfselektrode verbunden. Eine Zündhilfselektrode ist um die Zuleitung zur ersten Elektrode der Lampe Lp gewickelt und mit Anschluss J3 verbunden.

Zum Zünden der Lampe gibt die Wechselspannungsquelle 1 eine rechteckförmige Wechselquellspannung Uvb ab, die eine Oberschwingung in der Nähe der Resonanzfrequenz des Serienschwingkreises aufweist. Dadurch entsteht an der Resonanzkapazität C1 eine Zündspannung Uc, die über die Anschlüsse J1 und J2 der Lampe Lp zugeführt wird. Damit die Zündspannung Uc zum Zünden der Lampe Lp ausreicht, muss zwischen den Anschlüssen J1 und J3 eine Spannung UL2 bereit gestellt werden, die die Zündspannung Uc übersteigt. Dies ist der Fall, wenn für ein Übersetzungsverhältnis des Zündübertragers ein Wert über 1 gewählt wird.

Zwischen dem Anschluss J3 und J2 bildet sich die Spannung Uz aus. Je größer der Wert der Spannung Uz ist, desto geringer sind die Anforderungen an die Höhe der Zündspannung. Erfindungsgemäß wird deshalb ein Wickelsinn für den Zündübertrager gewählt, wie er in der Figur durch Punkte an den Induktivitäten L1 und L2 festgelegt ist. Beim vorgegebenen Wickelsinn ist Uz gleich der Summe und nicht die Differenz der Beträge der Spannungen Uc und UL2.

Im folgenden sei noch ein Dimensionierungsbeispiel für die bevorzugte Ausführung der Erfindung gemäß der Figur angegeben:

Wird für die Wechselquellspannung Uvb ein Wert von 180V gewählt, für die Resonanzinduktivität L1 ein Wert von 180µH, für die Resonanzkapazität C1 ein Wert von 2,2nF, für des Übersetzungsverhältnis des Zündübertragers ein Wert von 6, dann ergibt sich bei einer Frequenz der Wechselquellspannung Uvb von ca. 51kHz ein Spitzenwert für die Spannung UL2 von ca. 4kV.

## Patentansprüche

1. Schaltungsanordnung zur Zündung von Hochdruck-Entladungslampen mit folgenden Merkmalen:
• einem Zündhilfselektroden-Anschluss (J3),
• einem ersten (J1) und einem zweiten (J2) Lampenanschluss,
• einem Serienschwingkreis, bestehend aus der Serienschaltung einer Resonanzinduktivität (L1) und einer Resonanzkapazität (C1), an deren Verbindungsstelle sich ein Schwingkreismittelpunkt (2) ausbildet, der mit dem ersten Lampenanschluss (J1) gekoppelt ist, während der zweite Lampenanschluss mit dem, dem Schwingkreismittelpunkt (2) abgewandten Anschluss der Resonanzkapazität (C1) gekoppelt ist,
**gekennzeichnet, durch** folgende Merkmale:
• einen Zündübertrager mit einer Primär- und einer Sekundärwicklung (L2), wobei in die Primärwicklung die Spannung, die an der Resonanzinduktivität (L1) anliegt, eingespeist wird,
• der Zündhilfselektroden-Anschluss (J3) mit einem ersten Anschluss der Sekundärwicklung (L2) des Zündübertragers gekoppelt ist.

2. Schaltungsanordnung gemäß Anspruch 1, **dadurch gekennzeichnet, dass** ein zweiter Anschluss der Sekundärwicklung (L2) mit dem Schwingkreismittelpunkt (2) gekoppelt ist.

3. Schaltungsanordnung gemäß Anspruch 1, **dadurch gekennzeichnet, dass** die Primärwicklung durch die Resonanzinduktivität (L1) gebildet wird.

4. Schaltungsanordnung gemäß Anspruch 1, **dadurch gekennzeichnet, dass** der Wickelsinn des Zündübertragers so gewählt ist, dass mit Bezug auf den zweiten Lampenanschluss (J2) die Spannung am Zündhilfselektroden-Anschluss (J3) größer ist, als die Spannung am ersten Lampenanschluss (J1).

5. Beleuchtungssystem, das folgende Komponenten enthält:
• eine Schaltungsanordnung gemäß Anspruch 1
• eine Hochdruck-Entladungslampe (Lp) deren Elektroden jeweils mit dem ersten (J1) und dem zweiten (J2) Lampenanschluss gekoppelt sind,
• eine Zündhilfselektrode, die an der Lampe montiert ist und mit dem Zündhilfselektroden-Anschluss (J3) gekoppelt ist

6. Beleuchtungssystem gemäß Anspruch 5, **dadurch gekennzeichnet, dass** die Lampe (Lp) an einer Elektrodenzuführung einen Hohlraum besitzt, um den die Zündhilfselektrode zumindest teilweise gewickelt ist.
